Europäisches Patentamt

European Patent Office

Office européen des brevets

(19)

(11) Publication number: **0 276 041 B1**

# EUROPEAN PATENT SPECIFICATION

(12)

(45) Date of publication of patent specification: **25.03.92**   (51) Int. Cl.⁵: **B29B 15/12**, B29C 67/14, B29D 30/38

(21) Application number: **88200098.7**

(22) Date of filing: **21.01.88**

Consolidated with 88901042.7/0342197
(European application No./publication No.) by
decision dated 10.01.91.

(54) **Process for preparing composite material including vulcanized products notably tires, ceramics and electrodes and products obtained with said process.**

(30) Priority: **23.01.87 FR 8700797**
        **18.02.87 FR 8702105**
        **18.02.87 FR 8702106**
        **19.03.87 US 27793**

(43) Date of publication of application:
        **27.07.88 Bulletin 88/30**

(45) Publication of the grant of the patent:
        **25.03.92 Bulletin 92/13**

(84) Designated Contracting States:
        **AT BE CH DE ES FR GB GR IT LI LU NL SE**

(56) References cited:
        **EP-A- 0 179 688        US-A- 3 634 220**
        **US-A- 3 771 202        US-A- 3 919 437**
        **US-A- 3 984 366        US-A- 4 302 264**

(73) Proprietor: **Pradom Limited**
        **70 Finsbury Pavement**
        **London EC2A 1SX(GB)**

(72) Inventor: **Berger, Michel**
        **104, La Lande**
        **Sainte Helene F-33480**
        **Castelnau-De-Medoc(FR)**

(74) Representative: **Portal, Gérard et al**
        **Cabinet Beau de Loménie 55, rue d'Amsterdam**
        **F-75008 Paris(FR)**

## Description

The present invention relates to a process for preparing a vulcanized composite material, in particular tires,.

Composite materials are material constituted of reinforced elements (mostly fibers - or filaments - such as glass fibers, carbon fibers, boron or polyamide fibers, etc ...) and of a matrix (constituted either by a resin or a resistant material such as metal or ceramics).

The properties of composite materials are particularly dependent, as we know of :
- the orientation of the reinforcing elements ;
- the good distribution of the matrix throughout the volume between the reinforcing elements ;
- and of any bonds which may be induced between said reinforcing elements and said matrix.

It is therefore an advantage to use a technique wherein the above parameters can be worked in such a way to optimize the properties of the product as a function of the aim in view.

To this effect, it has been proposed in EP-A-179 688 a process for manufacturing composite materials of highly improved mechanical properties comprising subjecting the reinforcing elements to an electrostatic field induced by a very high voltage current, and then impregnating them with the liquid matrix, using the known techniques, while said elements are still under the influence of said field.

The present invention relates to a use of the process as described in EP-A-179 688 for preparing composite materials with oriented reinforcing elements, to the vulcanization and production of tires, and also the vulcanized products, in particular tires, obtained according to said process.

Indeed, it has been found that the application of this process causes unexpected effects during a vulcanization treatment, and that it was most advantageous for the production of tires and in particular radial-ply tires.

The present invention therefore relates to a use of the process as described in EP-A-179 688 to vulcanization, and in particular to the production of tires, such as radial-ply tires.

In this respect, the invention concerns a process for the manufacture of a vulcanized composite material having improved mechanical wear properties, the composite materiAl having reinforced fibers that reinforce a vulcanizable matrix, comprising the steps of :

subjecting the fibers to an electrostatic field that is induced by a high-voltage electric current to prepare the fibers to be impregnated ;

impregnating said fibers with a vulcanizable liquid matrix or precursor of vulcanizable matrix while still under the influence of said electrostatic field thereby consolidating bonding between the fibers and the matrix ; and

vulcanizing the impregnated fibers/matrix composite thereby obtaining said vulcanized composite material.

According to a particular feature, said electrostatic field includes time sequential first and second fields that are induced by high voltage electric currents.

According to another feature, one of said field is induced by an A.C. electric current and the other of said fields is induced by a D.C. electric current.

According to a specific feature, the first of said fields in induced by D.C. electric current and the second one of said fields is induced by A.C. electric current.

According to another feature, it is further including the step of shaping the impregnated fibers/matrix composite into a vehicle tire to obtain a vehicle tire as the vulcanized composite material. According to a particular feature, the fibers used as reinforcing elements are selected from the group consisting of polyamide fibers, plant fibers and glass fibers.

According to a specific feature, the matrix is selected from the group consisting of polyurethane elastomer, natural rubber, synthetic rubber, rhodorsil, silicon thermoplastic elastomer, and mixtures thereof.

According to another feature, woven Kevlar fibers as reinforcing fibers are used with polyurethane elastomer as matrix, the relative proportion being about 40 % by weight of woven Kevlar fibers with about 60 % by weight of polyurethane elastomer.

According to an interesting feature, the D.C. electric current is about a 40,000 V D.C. electric current and the A.C. electric current is about a 20,000 V electric curent.

According to another feature, the D.C. electric current is about a 100,000 V D.C. electric current and the A.C. electric current is about a 25,000 V electric current.

According to another feature, said fibers are of a dielectric material which can be advantageously selected from the group consisting of polyamide fibers, glass fibers, metallic oxide fibers, carbon fibers and mixtures thereof.

The invention also concerns a process for the manufacture of a composite material usable as a vehicle tire having improved mechanical and wear properties, the composite material having tire reinforcing fibers that reinforce a tire matrix, comprising the steps of :

subjecting the fibers to an electrostatic field that is induced by a high-voltage electric current to prepare the fibers to be impregnated ;

inpregnating said fibers with a liquid matrix or precursor of matrix while still under the influence of said electrostatic field thereby consolidaring bonding between the fibers and the matrix ; and

vulcanizing the impregnated fibers/matrix composite so that the resulting vulcanized material is usable as a vehicle tire.

Preferably, this process includes the step of shaping the impregnated fibers/matrix composite into a vehicle tire.

In this particular application of the process described hereinabove, it has been found that the application of an A.C. type high-voltage electrostatic field, causes a roughness of the fibers surface, thus radically and totally unexpectedly improving the surface bonding strength of the elastomer vulcanized on the surface of the fibers, thereby radically improving the mechanical properties of the vulcanized products and in particular of tires, such as radial-ply-tires.

The present invention also relates to the vulcanized products obtained according to said process, such as tires, and preferably radial-ply tires.

EXAMPLE 1

Woven Kevlar fibers are placed between the plates of an electrostatic field generating device, which plates can be fed with a high-voltage alternating or direct current according to the process and device disclosed in EP-A-179 688.

First of all a high voltage direct current of at least 40,000 volts is applied to said plates for a few minutes in order to separate the fibers and to obtain a swelling thereof, the overall thickness of the fibers then reaching between two and four times the thickness of the bed of fibers initially introduced between the plates forming electrodes, as described in EP-A-179 688.

Then an alternative current at a voltage of preferably at least 20,000 volts is applied for a few minutes, in order to obtain a roughness of the fibers surface due to an etching effect created on the surface by localized discharges when the electrostatic field is modified by reversing the polarity of the electric field.

While the Kevlar® fibers are still under the influence of the elctrostatic field, said fibers are embedded in a polyurethane elastomer which any contain one or more of the conventional vucalnizing agents, such as sulphur, in a relative proportion of 40 % by weight of Kevlar® fibers and 60 % by weight of polyurethane elastomer.

Then, it is proceeded with the conventional vulcanizing treatment which may comprise a shaping in order to obtain a tire.

To this end, the process may be carried out so as to obtain a radial-ply tire in a quite conventional way.

The resulting vulcanized product is found to have mechanical properties which are radically improved over the conventionally vulcanized products which have not been submitted to a treatment by a high-voltage A.C. or D.C. electric field.

EXAMPLE 2

The procedure is the same as in Example 1, except that the fibers used are KEVLAR® type polyamide fibers woven at 60 % lengthwise and at 40 % widthwiwe. The fibers are subjected for 10 minutes to a direct CURRENT OF 100,000 V. then for 15 minutes to an alternating current of 25,000 V. Each one of these two electrostatic treatments consisting in causing first a stream of hot air at 90°C followed by a stream of hotter air, at more than 100°C, for example around 130°C, to flow between the plates, then the treated fibers are impregnated, while still under the influence of an electrostatic discharge, with a soft matrix composed of a polyurethane elastomer containing an adhesive bond constituted by a phenolic resin of the "Rhône-Poulenc" A.R.P. 27 type.

The resulting material is then put under a pressure of $2t/dm^2$ and baked by polymerisation at 140°C for four hours, then heating is stopped and the resulting product is allowed to cool for 24 hours. The resulting vulcanized elastomer can be used as vehicle tire and is found to have the following characteristics :

Characteristics :

- Density :
2.35
- Color :
dark grey
- Maximum temperature of use :
150°C
- Fibers-matrix delamination :
none after 10,000 helical twistings.

The matrix used here may be replaced for example by natural rubber.

It is also possible for various applications to obtain the same supple products with pre-treated vegetable fibers (such as for example, fibers, fibers pre-treated in phenol-based solutions).

Tests conducted in laboratories have given excellent results with flaw and hemp fibers.

The swelling and pigmentation reaction obtained in electrostatic fields is particularly advantageous, because the swelling effect is such that the "blotting effect" permits instant absorption of the different matrices with which said fibers may have been mixed.

## Claims

1. A process for the manufacture of a vulcanized composite material having improved mechanical and wear properties, the composite material having reinforcing fibers that reinforce a vulcanizable matrix, comprising the steps of :

subjecting the fibers to an electrostatic field that is induced by a high-voltage electric current to prepare the fibers to be impregnated ;

impregnating said fibers with a vulcanizable liquid matrix or precursor of vulcanizable matrix while still under the influence of said electrostatic field thereby consolidating bonding between the fibers and the matrix ; and

vulcanizing the impregnated fibers/matrix composite, thereby obtaining said vulcanized composite material.

2. The process of claim 1, wherein said electrostatic field includes time sequential first and second fields that are induced by high-voltage electric currents.

3. The process of claim 2, wherein one of said fields is induced by an A.C. electric current and where the other of said fields is induced by a D.C. electric current.

4. The process of claim 1, wherein the first of said fields is induced by D.C. electric current and the second one of said fields is induced by A.C. electric current.

5. The process of claim 1, further including the step of shaping the impregnated fibers/matrix composite into a vehicle tire to obtain a vehicle tire as the vulcanized composite material.

6. The process of claim 1, wherein the fibers used as reinforcing elements are selected from the group consisting of polyamide fibers, plant fibers and glass fibers.

7. The process of claim 1, wherein the matrix is selected from the group consisting of polyurethane elastomer, natural rubber, synthetic rubber, rhodorsil, silicon, thermoplastic elastomer, and mixtures thereof.

8. The process of claim 1 or 6, wherein woven Kevlar fibers as reinforcing fibers are used with polyurethane elastomer as matrix, the relative proportion being about 40 % by weight of woven Kevlar fibers with about 60 % by weight of polyurethane elastomer.

9. The process of claim 4, wherein the D.C. electric current is about a 40,000 V D.C. electric current and wherein the A.C. electric current is about a 20,000 V electric current.

10. The process of claim 4, wherein the D.C. electric current is about a 100,000 V D.C. electric current and wherein the A.C. electric current is about a 25,000 V electric current.

11. The process of claim 1 or 6, wherein said fibers are of a dielectric material.

12. The process of claim 11, wherein said dielectric material is selected from the group consisting of polyamide fibers, glass fibers, metallic oxide fibers, carbon fibers and mixtures thereof.

13. A process for the manufacture of a composite material usable as a vehicle tire having improved mechanical and wear properties, the composite material having tire reinforcing fibers that reinforce a tire matrix, comprising the steps of :

subjecting the fibers to an electrostatic field that is induced by a high-voltage electric current to prepare the fibers to be impregnated ;

impregnating said fibers with a liquid matrix or precursor of matrix while still under the influence of said electrostatic field thereby consolidating bonding between the fibers and the matrix ; and

vulcanizing the impregnated fibers/matrix composite so that the resulting vulcanized material is usable as a vehicle tire.

## Revendications

1. Procédé de fabrication d'un matériau composite vulcanisé ayant des propriétés mécaniques et d'usure améliorées, le matériau composite comportant des fibres de renforcement qui renforcent une matrice vulcanisable, comprenant les étapes consistant à :

soumettre les fibres à un champ électrostatique qui est induit par un courant électrique à haute tension pour préparer les fibres pour l'imprégnation ;

imprégner lesdites fibres avec une matrice liquide vulcanisable ou un précurseur de matrice vulcanisable, tandis qu'elles sont encore sous l'influence dudit champ électrostatique pour consolider ainsi la liaison entre les fibres et la matrice ; et

vulcaniser le composite fibres imprégnées/matrice pour obtenir ainsi ledit matériau composite vulcanisé.

2. Procédé selon la revendication 1, dans lequel ledit champ électrostatique comprend des premier et second champs successifs dans le temps qui sont induits par des courants électriques à haute tension.

3. Procédé selon la revendication 2, dans lequel l'un desdits champs est induit par un courant électrique alternatif et l'autre desdits champs est induit par un courant électrique continu.

4. Procédé selon la revendication 1, dans lequel le premier desdits champs est induit par un courant électrique continu et le second desdits champs est induit par un courant électrique alternatif.

5. Procédé selon la revendication 1, comprenant en outre l'étape consistant à mettre le composite fibres imprégnées/matrice sous forme d'un pneumatique de véhicule pour obtenir un pneumatique de véhicule en tant que matériau composite vulcanisé.

6. Procédé selon la revendication 1, dans lequel les fibres utilisées comme éléments de renforcement sont choisies dans le groupe formé par les fibres de polyamide, les fibres végétales et les fibres de verre.

7. Procédé selon la revendication 1, dans lequel la matrice est choisie dans le groupe formé par un élastomère de polyuréthanne, le caoutchouc naturel, le caoutchouc synthétique, le rhodorsil, une silicone, un élastomère thermoplastique et leurs mélanges.

8. Procédé selon la revendication 1 ou 6, dans lequel des fibres de Kevlar tissées utilisées comme fibres de renforcement sont utilisées avec un élastomère de polyuréthanne formant la matrice, dans les proportions relatives d'environ 40 % en poids de fibres de Kevlar tissées pour d'environ 60 % en poids d'élastomère de polyuréthanne.

9. Procédé selon la revendication 4, dans lequel le courant électrique continu est un courant électrique continu d'environ 40 000 V et le courant électrique alternatif est un courant électrique d'environ 20 000 V.

10. Procédé selon la revendication 4, dans lequel le courant électrique continu est un courant électrique d'environ 100 000 V et le courant électrique alternatif est un courant électrique d'environ 25 000 V.

11. Procédé selon la revendication 1 ou 6, dans lequel lesdites fibres sont constituées par un matériau diélectrique.

12. Procédé selon la revendication 11, dans lequel ledit matériau diélectrique est choisi dans le groupe formé par les fibres de polyamide, les fibres de verre, les fibres d'oxyde métallique, les fibres de carbone et leurs mélanges.

13. Procédé de fabrication d'un matériau composite utilisable comme pneumatique de véhicule ayant des propriétés mécaniques et d'usure améliorées, le matériau composite ayant des fibres de renforcement de pneumatique qui renforcent une matrice de pneumatique, comprenant les étapes consistant à :

soumettre les fibres à un champ électrostatique qui est induit par un courant électrique à haute tension pour préparer les fibres pour l'imprégnation ;

imprégner lesdites fibres avec une matrice liquide ou un précurseur de matrice, tandis qu'elles sont encore sous l'influence dudit champ électrostatique pour consolider ainsi la liaison entre les fibres et la matrice ; et

vulcaniser le composite fibres imprégnées/matrice de manière que le matériau vulcanisé résultant puisse être utilisé comme pneumatique de véhicule.

**Patentansprüche**

1. Verfahren zur Herstellung eines vulkanisierten Verbundwerkstoffs mit verbesserten mechanischen Eigenschaften und Verschleißeigenschaften, wobei der Verbundwerkstoff Verstärkungsfasern aufweist, die eine vulkanisierbare Matrix verstärken, das folgende Schritte umfaßt:

Aussetzen der Fasern einem elektrostatischen Feld, das durch einen elektrischen Hochspannungsstrom induziert wird, um die Fasern für die Imprägnierung vorzubereiten;

Imprägnieren der Fasern mit einer vulkanisierbaren flüssigen Matrix oder einer Vorstufe einer vulkanisierbaren Matrix, während sie noch unter dem Einfluß des elektrostatischen Feldes stehen, um damit die Bindung zwischen den Fasern und der Matrix zu festigen, und Vulkanisieren des imprägnierten Fasern/Matrix-Verbunds, um den vulkanisierten Verbundwerkstoff zu erhalten.

2. Verfahren nach Anspruch 1, wobei das elektrostatische Feld erste und zweite Felder in zeitlicher Abfolge umfaßt, die durch elektrische Hochspannungsströme induziert werden.

3. Verfahren nach Anspruch 2, wobei eines der Felder durch einen Wechselstrom und das andere der Felder durch einen Gleichstrom induziert werden.

4. Verfahren nach Anspruch 1, wobei das erste der Felder durch einen Gleichstrom und das zweite der Felder durch einen Wechselstrom induziert werden.

5. Verfahren nach Anspruch 1, das ferner den Schritt des Formens des imprägnierten Faser/Matrixverbunds zu einem Fahrzeugreifen umfaßt, um einen Fahrzeugreifen als den vulkaniserten Verbundwerkstoff zu erhalten.

6. Verfahren nach Anspruch 1, wobei die als verstärkende Elemente verwendeten Fasern aus der aus Polyamidfasern, Pflanzenfasern und Glasfasern bestehenden Gruppe ausgewählt werden.

7. Verfahren nach Anspruch 1, wobei die Matrix aus der aus Polyurethanelastomer, natürlichem Kautschuk, synthetischem Kautschuk, Rhodorsil, Silicon, thermoplastischem Elastomer und Mischungen von diesen bestehenden Gruppe ausgewählt wird.

8. Verfahren nach Anspruch 1 oder 6, wobei gewebte Kevlarfasern als verstärkende Fasern mit Polyurethanelastomer als Matrix verwendet werden und das relative Verhältnis ungefähr 40 Gew.-% gewebter Kevlarfasern mit ungefähr 60 Gew.-% Polyurethanelastomer beträgt.

9. Verfahren nach Anspruch 4, wobei der elektrische Gleichstrom ein elektrischer Gleichstrom von ungefähr 40 000 V und der elektrische Wechselstrom ein elektrischer Wechselstrom von ungefähr 20 000 V ist.

10. Verfahren nach Anspruch 4, wobei der elektrische Gleichstrom ein elektrischer Gleichstrom von ungefähr 100 000 V und der elektrische Wechselstrom ein elektrischer Wechselstrom von ungefähr 25 000 V ist.

11. Verfahren nach Anspruch 1 oder 6, wobei die Fasern aus einem dielektrischen Material bestehen.

12. Verfahren nach Anspruch 11, wobei das dielektrische Material aus der aus Polyamidfasern, Glasfasern, Metalloxidfasern, Kohlenstoffasern und Mischungen von diesen bestehenden Gruppen ausgewählt wird.

13. Verfahren zur Herstellung eines Verbundwerkstoffs, verwendbar als Fahrzeugreifen mit verbesserten mechanischen Eigenschaften und Verschleißeigenschaften, wobei der Verbundwerkstoff den Reifen verstärkende Fasern, die eine Reifenmatrix verstärken, aufweist, das die folgenden Schritte umfaßt:
Unterwerfen der Fasern einem elektrostatischen Feld, das durch einen elektrischen Hochspannungsstrom induziert wird, um die Fasern für die Imprägnierung vorzubereiten;
Imprägnieren der Fasern mit einer flüssigen Matrix oder einer Vorstufe einer Matrix, während sie noch unter dem Einfluß des elektrostatischen Feldes stehen, um dadurch die Bindung zwischen den Fasern und der Matrix zu festigen; und
Vulkanisieren des imprägnierten Faser/Matrixverbundstoffes, so daß das resultierende vulkanisierte Material als Fahrzeugreifen verwendbar ist.